# EUROPÄISCHE PATENTSCHRIFT

(11) **EP 2 161 110 B1**
(45) Veröffentlichungstag und Bekanntmachung des Hinweises auf die Patenterteilung: **20.07.2016**
(21) Anmeldenummer: 09015710.8
(22) Anmeldetag: 02.05.2007
(51) Int. Cl.: B25H 1/06, B25H 1/10, B23D 47/02

(54) **Maschinenständer**
Machine stand
Montant de machine

(30) Priorität: 12.06.2006 DE 202006009307 U
(43) Veröffentlichungstag der Anmeldung: 10.03.2010
(62) Teilanmeldung aus: 08017328.9
(73) Patentinhaber: Metabowerke GmbH, 72622 Nürtingen (DE)
(72) Erfinder: Bergmann, Laurenz, 49733 Haren/Ems (DE); Blekker, Ingo, 49842 Uelsen (DE); Evers, Jürgen, 48480 Spelle (DE); Meelker, Thomas, 49767 Twist (DE)
(74) Vertreter: Lorenz, Markus

(56) Entgegenhaltungen:
- EP-A- 1 275 476
- EP-A1- 0 824 054
- WO-A-2004/050309
- DE-A1- 10 303 115
- US-A- 4 909 491
- US-A- 5 836 365

## Beschreibung

Die Erfindung betrifft einen Maschinenständer mit den Merkmalen des Oberbegriffes von Anspruch 1.

Aus dem Dokument WO2004/050309 ist ein Maschinenständer gemäß dem Oberbegriff des Anspruchs 1 bekannt.

Maschinenständer der in Rede stehenden Art sind in verschiedenen Ausführungsformen bekannt. Der bekannte Maschinenständer, von dem die Erfindung konkret ausgeht (US-A-5,836,365), dient der sicheren Anordnung und Halterung einer Kapp- und Gebrungssäge auf einer Plattform, die ihrerseits mit zwei an der Unterseite befindlichen Maschinenhaltem auf einem langgestreckten Tragkörper des Maschinenständers befestigt ist. Damit ist es möglich, mit der Kapp- und Gehrungssäge oder einer anderen Werkzeugmaschine in einer Arbeitshöhe zu arbeiten, die einem üblichen Arbeitstisch in einem Werkraum entspricht. Der Maschinenständer ersetzt als transportables Gerät gewissermaßen den Arbeitstisch in der Werkstatt.

An dem langgestreckten Tragkörper des bekannten Maschinenständers sind endscitig jeweils zwei Standbeine angeordnet, die in Gebrauchsstellung trapezartig schräg nach außen gerichtet sind. Dadurch hat der Maschinenständer eine hohe Standfestigkeit. Jeweils zwei Standbeine sind gemeinsam in einer aus Metallblech ausgeführten Konsole am Ende des Tragkörpers schwenkbar gelagert. Jedes Standbein liegt in der Gebrauchsstellung an einem Anschlag der von der Konsole gebildeten Standbeinhalterung an und ist dort verriegelt. Dazu trägt das Standbein ein Riegelelement, das an einer kreisbogenförmigen Kulisse der Konsole läuft und in eine verriegelte Stellung federvorgespannt ist. In einer Ruhestellung mit etwa parallel zum Tragkörper ausgerichteter Lage ist das Standbein ebenfalls durch das Riegelelement an der Kulisse unter Federvorspannung verrastet. Jedes Standbein muß man somit einzeln aus der Ruhestellung freigeben, damit es in die Gebrauchsstellung geschwenkt werden kann.

Jedes Standbein ist als einfaches Stahlrohr ausgeführt und trägt an seinem unteren Ende einen Gummifuß.

Der Tragkörper ist als verwindungssteifes Rückgrat des Maschinenständers einstückig als Hohlprofil aus stranggepreßtem Leichtmetall, insbesondere Aluminium ausgeführt. In die Hohlkammer des Tragkörpers ist ein Verlängerungsprofil einschiebbar, mit dem ein Zusatzständer am eigentlichen Maschinenständer, diesen verlängernd angebracht werden kann.

Die bekannten Maschinenständer sind in der Praxis gut brauchbar. Es hat sich allerdings gezeigt, daß die Konstruktion der bekannten Maschinenständer in verschiedenen Aspekten noch nicht optimal ist. Hier liegt der Erfindung das Problem zugrunde, einen in Hinsicht auf die Standbeine optimierten Maschinenständer zu schaffen.

Für die folgenden Erläuterungen gilt, daß Bezüge zu horizontal und vertikal, Längsrichtung und Querrichtung bei aufgebautem Maschinenständer, also in Gebrauchsstellung, zu verstehen sind, sofern nichts anderes gesagt wird.

Die zuvor aufgezeigte Problemstellung wird gemäß der Erfindung bei einem Maschinenständer mit den Merkmalen des Oberbegriffs von Anspruch 1 durch die Merkmale des kennzeichnenden Teil von Anspruch 1 gelöst.

Bevorzugte Ausgestaltungen und Weiterbildungen sind Gegenstand der Unteransprüche.

Nachfolgend wird der erfindungsgemäße Maschinenständer anhand einer lediglich Ausführungsbeispiele darstellenden Zeichnung näher erläutert. Bei der Erläuterung der Ausführungsbeispiele anhand der Zeichnung werden auch und besonderes alle Vorteile und Wirkungen verschiedener Merkmale des erfindungsgemäßen Maschinenständers im Detail erläutert. In der Zeichnung zeigt
- Fig. 1: in einer perspektivischen Ansicht ein Ausführungsbeispiel eines Maschinenständers ohne aufgebaute Werkzeugmaschine,
- Fig. 2: den Tragkörper des Maschinenständers aus Fig. 1 mit eingeklappten Standbeinen,
- Fig. 3: in einer Perspektive ein Ausführungsbeispiel einer erfindungsgemäß realisierten Standbeinhalterung,
- Fig. 4: ein modifiziertes Ausführungsbeispiel des in Fig. 1 dargestellten Maschinenständers in Ruhestellung mit eingeklappten Standbeinen und daran befindlichen Transportrollen,
- Fig. 5: den Maschinenständer aus Fig. 4 in Gebrauchsstellung,
- Fig. 6: in einer Detailansicht eine Verschiebeführung für eine Transportrolle an einem Standbein gemäß Fig. 4.

Der in den Zeichnungen dargestellte erfindungsgemäße Maschinenständer dient gewissermaßen als transportabler Arbeitstisch zur Anordnung einer Werkzeugmaschine, insbesondere einer Kapp- und Grehrungssäge in einer angenehmen Bearbeitungshöhe, beispielsweise an einer Baustelle oder an unterschiedlichen Stellen im Haus bei einem Innenausbau.

Für die Anordnung der Kapp- und Gehrungssäge auf dem Maschinenständer gibt es verschiedene Möglichkeiten, die umfangreich aus dem Stand der Technik bekannt sind. Grundsätzlich könnte man die Kapp- und Gehrungssäge auf dem Maschinenständer insgesamt ihrerseits nochmals um eine Hochachse drehbar anordnen, um bestimmte Zusatzfunktionen zu erzielen.

Im übrigen gilt, daß der Maschinenständer ein Universalteil ist, das mit jeder Art von Werkzeugmaschine sinnvoll eingesetzt werden kann.

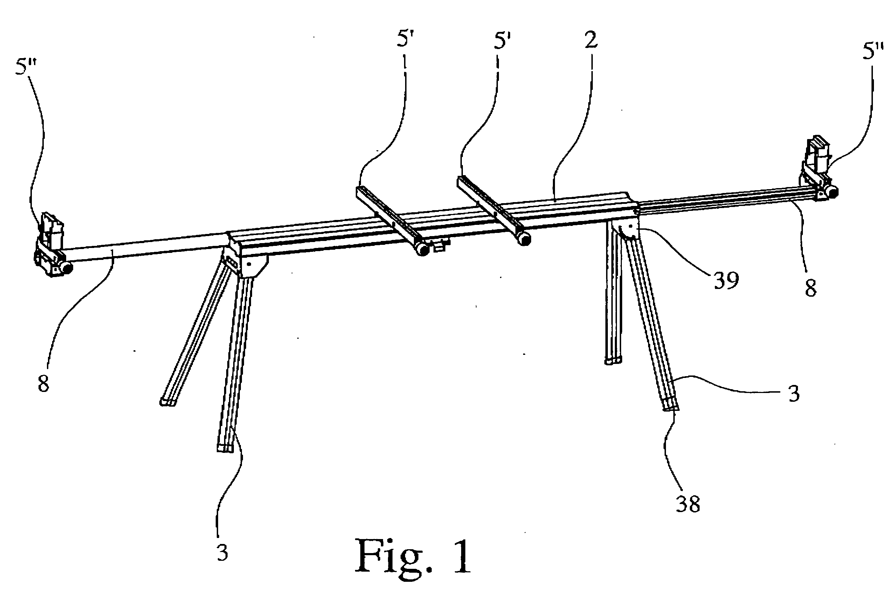

Der in Fig. 1 zunächst in seiner Gesamtheit dargestellte Maschinenständer weist als strukturgebendes Rückgrat einen langgestreckten Tragkörper 2 auf. Endseitig am Tragkörper 2 sind Standbeine 3 angeordnet Normalerweise hat man insgesamt vier Standbeine 3, die jeweils paarweise am Ende des Tragkörpers 2 in Gebrauchsstellung nach außen trapezartig abragen und so dem Maschinenständer insgesamt einen sicheren Stand geben.

Bereits in Fig. 1 ist angedeutet, daß der Tragkörper 2 derart mit in Längsrichtung verlaufenden Formschlußmitteln 4 gestaltet ist, daß an ihm Anbauteile 5, insbesondere mindestens ein Maschinenhalter 5', in Fig. 1 sind zwei Maschinenhalter 5' zu sehen, anbringbar sind. Die Anbringung der Anbauteile 5 am Tragkörper 2 ist gegebenenfalls längsverschiebbar gewährleistet. Das gilt in Fig. 1 für die Maschinenhalter 5', wodurch es möglich ist, die Werkzeugmaschine, hier die Kappund Gehrungssäge, genau mittig auf dem Tragkörper 2 zu positionieren.

Anhand der weiteren Figuren werden nun viele Details des erfindungsgemäßen Maschinenständers im einzelnen beschrieben.

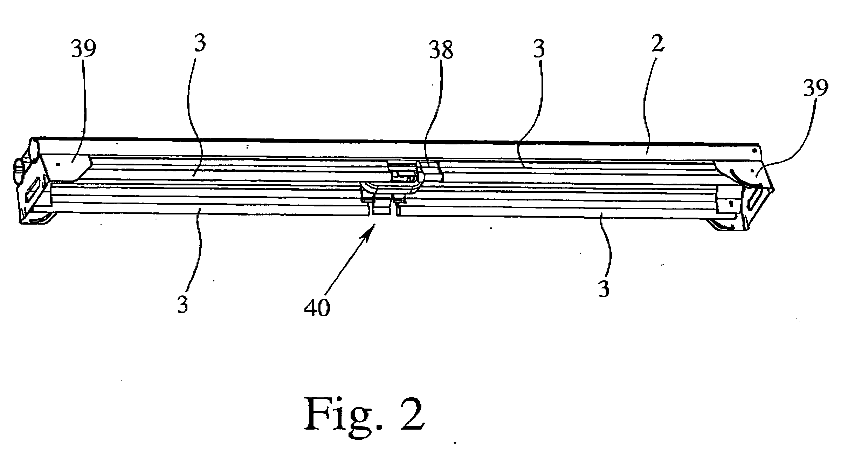

Fig. 1 läßt bereits die Standbeine 3 am Tragkörper 2 erkennen. Die Fig. 2 bis 6 zeigen nun Ausführungsbeispielel die sich mit den Standbeinen 3 des Maschinenständers befassen.

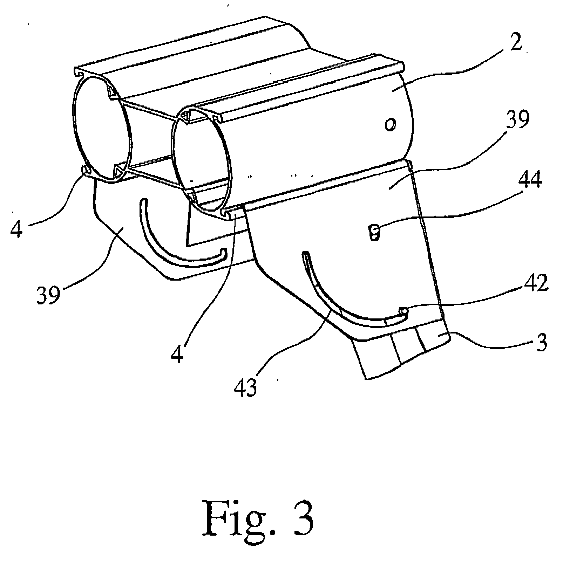

Aus Fig. 3 läßt sich erkennen, daß im hier dargestellten und bevorzugten Ausführungsbeispiel jedes Standbein 3 äußerlich als eine Art Doppelrohrprofil gestaltet ist, so daß es hantelförmig wirkt Innen gibt es aber keine parallel zueinander verlaufenden Profilrohre, sondern einen durchgehenden Hohlraum.

Wie bereits im Stand der Technik vorgesehen ist, gilt auch hier, daß an jedem Ende des Tragkörpers 2 zwei Standbeine 3 angeordnet sind und daß jedes Standbein 3 mittels einer Standbeinhalterung 39 am Tragkörper 2 befestigt ist.

Zunächst gilt generell, daß jedes Standbein 3 mittels einer Standbeinhalterung 39 schwenkbar gelagert ist dergestalt, daß es aus einer Ruhestellung mit etwa parallel zum Tragkörper 2 ausgerichteter Lage in eine Gebrauchsstellung mit gegenüber dem Tragkörper 2 nach unten und außen gerichteter Lage und umgekehrt schwenkbar ist. Dies entspricht den im Stand der Technik durchgehend realisierten Konstruktionen.

Grundsätzlich ist aber zu bemerken, daß die Konstruktion und Befestigung der Standbeine 3 völlig unabhängig davon ist, wie der Maschinenständer im übrigen ausgestaltet ist. Insbesondere könnte man für die weiter oben bereits geschilderten konstruktiven Varianten auch einzeln abnehmbare und umsteckbare Standbeine 3 verwenden.

Bei den schwenkbar angelenkten Standbeinen 3 ist hier anders als im Stand der Technik für eine Fixierung in der Ruhestellung nicht im Bereich der Standbeinhalterungen 39 gesorgt. Vielmehr ist im dargestellten Ausfuhrungsbeispiel (Fig. 2) vorgesehen, daß an der Unterseite des Tragkörpers 2 in der Mitte eine Halteanordnung 40 angebracht ist, in der die unteren Enden der Standbeine 3 in der Ruhestellung eingerastet sind und aus der die Standbeine 3 durch Tastendruck freigebbar sind. Diese Halteanordnung 40 besteht insbesondere aus einem entsprechend geformten Federstahlkörper, in den die hantelartig gestalteten Profile der Standbeine 3, wie Fig. 2 zeigt, sehr einfach und verläßlich einrasten können. Durch Tastendruck entlastet man die Halteanordnung 40, so daß alle vier Standbeine 3 bei in die Höhe gehaltenem Tragkörper 2 gleichzeitig ohne weitere Einflußnahme des Benutzers in ihre Gebrauchsstellung schwenken und dort verrasten können. Man kann auch andere Konstruktionen z.B. aus Kunststoff oder mit Magneten vorsehen.

Hat man in der Länge veränderliche Standbeine 3, so kann man durch eine Längsverschiebung der endseitigen Standbeinhalterungen 39 am Tragkörper 2 und erneute Fixierung am Tragkörper 2 in einer entsprechend in Längsrichtung verschobenen Stellung erreichen, daß die Halteanordnung 40 in der Mitte des Tragkörpers 2 immer wirksam bleibt.

Für das Ausführungsbeispiel gilt, daß jedes Standbein 3 zumindest in der Gebrauchsstellung an einem Anschlag 41 der Standbeinhalterung 39 anliegt und dort verriegelt ist. Insbesondere beim simultanen Ausschwenken der Standbeine 3 aus der Ruhestellung in die Gebrauchsstellung schwenken die Standbeine 3 von selbst an die Anschläge 41 heran.

Bei dem in Fig. 3 dargestellten Ausführungsbeispiel ist vorgesehen, daß das Standbein 3 ein Riegelelement 42 trägt, das an oder in einer kreisbogenförmigen Kulisse 43 in der Standbeinhalterung 39 läuft, deren Enden den Endstellungen des Standbeins 3 entsprechen. Für die Ausgestaltung derartiger Riegelelemente 42 gibt es im Stand der Technik eine Vielzahl von Anregungen. Die Anordnung der Kulisse 43 ist in den dargestellten Ausführungsbeispielen immer im Seitenblech der Standbeinhalterung 39 komplett geschlossen zu sehen. Alternativen mit randseitiger Kulisse finden sich im Stand der Technik.

Das in Fig. 3 angedeutete Ausführungsbeispiel hat eine Konstruktion dergestalt, daß die Schwenkachse 44 des Standbeins 3 selbst an der Standbeinhalterung 39 geringfügig, insbesondere in einem Langloch, längsverschiebbar gelagert ist In der Gebrauchsstellung ist das Standbein 3, insbesondere unter Federkraft, aufwärts in Richtung des Tragkörpers 2 verschoben und zugleich das Riegelelement 42 an der Standbeinhalterung 39 eingerastet.

Wie bereits im Stand der Technik realisiert worden ist, hat man auch bei den hier dargestellten Ausführungsbeispiel des erfindungsgemäßen Maschinenständers realisiert, daß die beiden Standbeinhalterungen 39 an einem Ende des Tragkörpers 2 einteilig miteinander als Konsole ausgeführt sind. Dabei ist die Konsole zweckmäßigerweise aus abgekantetem und einbrennlackiertem Metallblech ausgeführt.

Die Befestigung der Konsole bzw. der in der Konsole zusammengefaßten Standbeinhalterungen 39 am Tragkörper 2 erfolgt zweckmäßigerweise dergestalt, daß an der Unterseite des Tragkörpers 2 vorzugsweise nach außen weisende leistenartige Formschlußmittel 4 angeordnet sind, in die passende Führungsmittel an den Standbeinhalterungen 39 bzw. an der Konsole stirnseitig einschiebbar sind. Auf diese Verschiebemöglichkeit ist weiter oben bereits eingegangen worden.

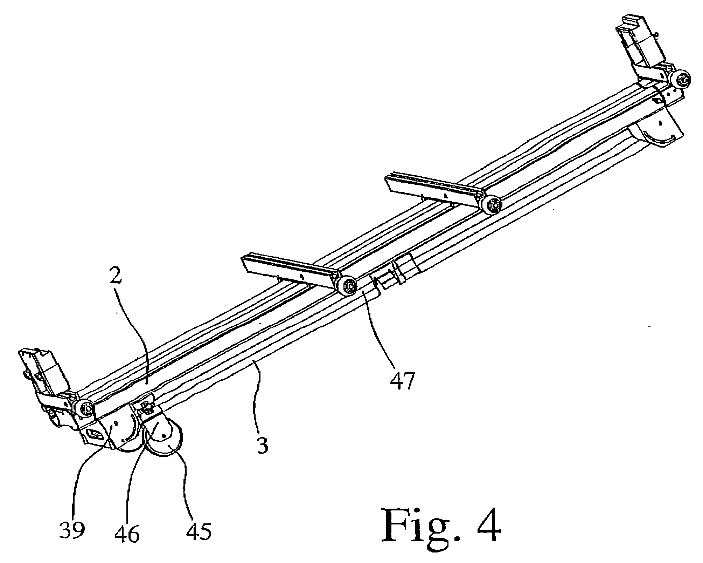

Schließlich machen die Darstellungen in Fig. 4 bis 6 noch eine besonders bevorzugte Ausgestaltung des erfindungsgemäßen Maschinenständers deutlich, die dadurch gekennzeichnet ist, daß an den Standbeinen 3, die an einem Ende des Tragkörpers 2 angeordnet sind, jeweils eine Transportrolle 45 angeordnet ist, die sich in Gebrauchsstellung des Standbeines 3 nahe an dessen unterem Ende befindet und ungefähr in Längsrichtung vom Standbein 3 abragt. Transportrollen 45 sind aus dem Stand der Technik für Maschinenständer der in Rede stehenden Art an sich bekannt. Ungefähr in Längsrichtung von Standbeinen 3 abragende Transportrollen 45 sind Standard für Baukreissägen und größere Tischkreissägen. So lassen sich durch Neigen des Traggestells die Transportrollen 45 auf den Boden bringen, so daß das Traggestell mitsamt der Werkzeugmaschine relativ einfach seitlich weggerollt werden kann. Dieses Konzept realisiert die Lehre auch bei dem vorliegenden Maschinenständer.

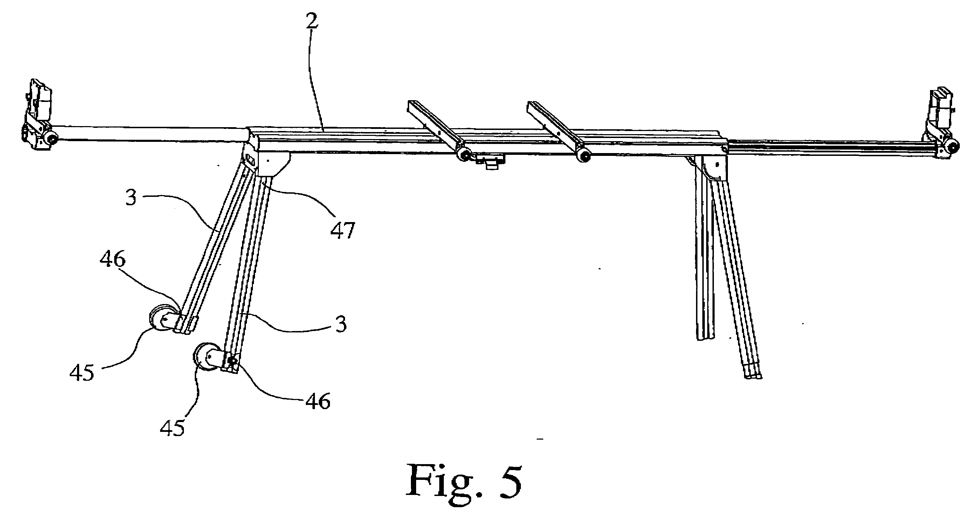

Die Besonderheit im vorliegenden Fall besteht jedoch darin, daß die Transportrolle 45 am Standbein 3 in einer Gebrauchsstellung nahe am unteren Ende und in einer Transportstellung nahe am tragkörperseitigen Ende anbringbar ist. Man sieht die unterschiedlichen Positionen der Transportrollen 45 an den beiden betroffenen Standbeinen 3 beim Vergleich von Fig. 4 und Fig. 5. So läßt sich tatsächlich auch der zusammengeklappte Maschinenständer mit den in Ruhestellung befindlichen Standbeine 3 (Fig. 4) vorzüglich ziehen.

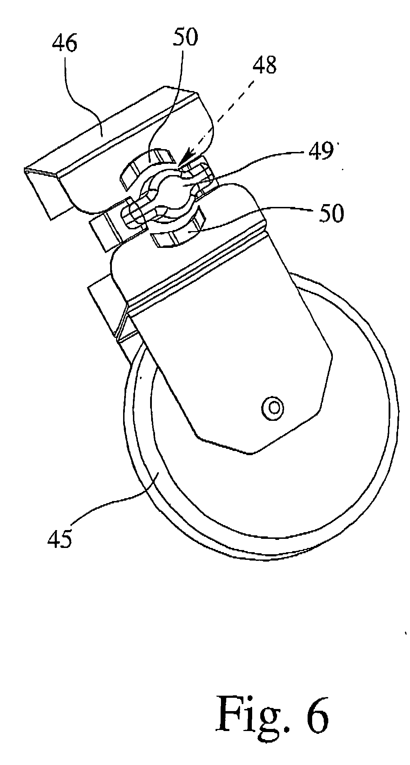

Fig. 6 zeigt Details einer Verschiebehalterung 46 am Standbein 3. Man erkennt, daß die Transportrolle 45 am Standbein 3 mittels einer Verschiebehalterung 46 angebracht und in Längsrichtung des Standbeins 3 verschiebbar und sowohl in ihrer Gebrauchsstellung als auch in ihrer Transportstellung am Standbein 3 fixierbar ist. Dabei erkennt man ferner, daß das Standbein 3 dort, wo die Verschiebehalterung 46 in der Gebrauchsstellung steht, wie auch dort, wo sie in der Transportstellung steht, eine Bohrung 47 aufweist und daß die Verschiebehalterung 46 einen federbelasteten Stift 48 trägt, der in die Bohrung 47 einrastbar ist. (Die Bohrung 47 ist in Fig. 4 und 5 am jeweils "nicht besetzten" Ende angedeutet, weil sie in Fig. 6 natürlich von der Verschiebehalterung 46 verdeckt ist.)

Die Besonderheit der Konstruktion in Fig. 6 besteht darin, daß der Stift 48 mit einem Knebel 49 o. dgl. drehbar ist, daß die Verschiebehalterung 46 eine Steuerkontur 50 aufweist und daß mittels der Steuerkontur 50 durch Drehung des Knebels 49 der Stift 48 quer zum Standbein 3 aus der Bohrung 47 entgegen Federkraftwirkung herausziehbar ist. Wenn man bei der Darstellung in Fig. 6 den Knebel 49 um 90° dreht, wird der darunter befindliche Stift 48 aus der darunter befindlichen Bohrung 47 im Mittelsteg des Standbeins 3 herausgezogen. Jetzt kann die Verschiebehalterung 46 mit der Transportrolle 45 auf dem Profil des Standbeins 3 in die andere Stellung geschoben werden. Dreht man jetzt den Knebel 49 in die in Fig. 6 dargestellte Stellung zurück, so schnappt der Stift 48 in die dortige Bohrung 47 unter Federkraft ein und die Verschiebehalterung 46 ist am anderen Ende des Standbeins 3 fixiert.

Auf diese Weise kann man mit der Verschiebehalterung 46 sicherstellen, daß die Transportrollen 45 immer an der für den jeweiligen Transportauftrag optimalen Stelle sitzen.

## Patentansprüche

1. Maschinenständer mit
einem langgestreckten Tragkörper (2) und
endseitig am Tragkörper (2) angeordneten Standbeinen (3),
wobei der Tragkörper (2) derart mit in Längsrichtung verlaufenden Formschlußmitteln (4) gestaltet ist, daß an ihm Anbauteüe (5), insbesondere mindestens ein Maschinenhalter (5'), gegebenenfalls in Längsrichtung verschiebbar, anbringbar sind,
wobei an jedem Ende des Tragkörpers (2) zwei Standbeine (3) angeordnet sind, jedes Standbein (3) mittels einer Standbeinhalterung (39) am Tragkörper (2) befestigt ist und jedes Standbein (3) mittels der Standbeinhalterung (39) schwenkbar gelagert ist dergestalt, daß es aus einer Ruhestellung mit etwa parallel zum Tragkörper (2) ausgerichteter Lage in eine Gebrauchsstellung mit gegenüber dem Tragkörper (2) nach unten und außen gerichteter Lage und umgekehrt schwenkbar ist,
**dadurch gekennzeichnet,**
**daß** das Standbein (3) ein Riegelelement (42) trägt, das an oder in einer kreisbogenförmigen Kulisse (43) in der Standbeinhalterung (39) läuft, deren Enden den Endstellungen des Standbeins (3) entsprechen, und
**daß** die Schwenkachse (44) des Standbeins (3) selbst an der Standbeinhalterung (39) geringfügig, insbesondere in einem Langloch, längsverschiebbar gelagert ist, daß in der Gebrauchsstellung das Standbein (3) aufwärts in Richtung des Tragkörpers (2) verschoben und zugleich das Riegelelement (42) an der Standbeinhalterung (39) eingerastet ist,

2. Maschinenständer nach Anspruch 1, **dadurch gekennzeichnet,**
**daß** die beiden Standbeinhalterungen (39) an einem Ende des Tragkörpers (2) einteilig miteinander als Konsole ausgeführt sind.

3. Maschinenständer nach Anspruch 2, **dadurch gekennzeichnet, daß** die Konsole aus Metallblech ausgeführt ist.

4. Maschinenständer nach einem der Ansprüche 1 bis 3, **dadurch gekennzeichnet,**
**daß** an der Unterseite des Tragkörpers (2) vorzugsweise nach außen weisende leistenartige Formschlußmittel (4) angeordnet sind, in die passende Fübrungsmittel an den Standbeinhalterungen (39) bzw, an der Konsole stirnseitig einschiebbar sind.

5. Maschinenständer nach einem der Ansprüche 1 bis 4, **dadurch gekennzeichnet,**
**daß** an den Standbeinen (3), die an einem Ende des Tragkörpers (2) angeordnet sind, jeweils eine Transportrolle (45) angeordnet ist, die sich in Gebrauchsstellung des Standbeines (3) nahe an dessen unterem Ende befindet und ungefähr in Längsrichtung vom Standbein (3) abragt.

6. Maschinenständer nach Anspruch 5, **dadurch gekennzeichnet,**
**daß** die Transportrolle (45) am Standbein (3) in einer Gebrauchsstellung nahe am unteren Ende und in einer Transportstellung nahe am tragkörperseitigen Ende anbringbar ist.

7. Maschinenständer nach Anspruch 6, **dadurch gekennzeichnet,**
**daß** die Transportrolle (45) am Standbein (3) mittels einer Verschiebehalterung (46) angebracht und in Längsrichtung des Standbeins (31) verschiebbar und sowohl in ihrer Gebrauchsstellung als auch in ihrer Transportstellung am Standbein (3) fixierbar ist.

8. Maschinenständer nach Anspruch 7, **dadurch gekennzeichnet,**
**daß** das Standbein (3) dort, wo die Verschiebehalterung (46) in der Gebrauchsstellung steht, wie auch dort, wo sie in der Transportstellung steht, eine Bohrung (47) aufweist und daß die Verschiebehalterung (46) einen federbelasteten Stift (48) trägt, der in die Bohrung (47) einrastbar ist,
wobei, vorzugsweise, der Stift (48) mit einem Knebel (49) o. dgl, drehbar ist, die Verschiebehalterung (46) eine Steuerkontur (50) aufweist und mittels der Steuerkontur (50) durch Drehung des Knebels (49) der Stift (48) quer zum Standbein (3) aus der Bohrung (47) entgegen Federkraftwirkung herausziehbar ist.

## Claims

1. A machine stand comprising
an elongate support body (2) and
support legs (3) arranged at the ends of the support body (2),
the support body (2) being designed with positive fit means (4) extending in the longitudinal direction, in such a way that add-on parts (5), in particular at least one machine holding device (5'), can be attached thereto, possibly so as to be displaceable in the longitudinal direction,
wherein at each end of the support body (2) two support legs (3) are arranged, and each support leg (3) is fastened to the support body (2) by means of a support-leg mounting (39), each support leg (3) being pivotally mounted by means of the support-leg mounting (39), such that it can be pivoted out of an initial positon having an orientation that is approximately parallel to the support body (2), into a position of use having an orientation downwards and outwards relative to the support body (2), and vice versa,
**characterized in that**
the support leg (3) is provided with a locking element (42) that runs or in an arcuate track (43) in the support-leg mounting (39), the ends of which track correspond with the end positions of the support leg (3), and
**in that** the pivot axis (44) of the support leg (3) is itself mounted so as to be capable of slight longitudinal displacement on the support leg mounting (39), in particular in an oblong slot, **in that** in the position of use the support leg (3) is displaced upwards in the direction of the support body (2), and at the same time the locking element (42) is locked in place on the support-leg mounting (39).

2. The machine stand as claimed in claim 1,
**characterized in that**
the two support-leg mountings (39) are realized in one piece with each other as a bracket, and one end of the support body (2).

3. The machine stand as claimed in claim 2,
**characterized in that**
the bracket is made of sheet metal.

4. The machine stand as claimed in any of claims 1 to 3,
**characterized in that**
arranged on the underside of the support body (2) there are preferably outwardly facing, strip-type positive fit means (4), into an outside face of which matching guide means on the support-leg mountings (39), or on the bracket, can be inserted by sliding.

5. The machine stand as claimed in any of claims 1 to 4,
**characterized in that**
a transport roller (45) is arranged on each of the support legs (3) arranged at one end of the support body (2), said transport roller (45), when the support leg (3) is in the position of use, being located close to the lower end of the latter and projecting approximately in the longitudinal direction from the support leg (3).

6. The machine stand as claimed in claim 5,
**characterized in that**
said transport roller (45) can be placed close to the lower end on the support leg (3) when in a position of use, and can be placed close to the end on the support body side when in a transport position.

7. The machine stand as claimed in claim 6,
**characterized in that**
said transport roller (45) is attached to the support leg (3) by means of a positioning mounting (46), and is displaceable in the longitudinal direction of the support leg (31) and can be fixed in position on the support leg (3), both in its position of use and in its transport position.

8. The machine stand as claimed in claim 7,
**characterized in that**
the support leg (3) has a bore (47) when the positioning mounting (46) is in the position of use, and also when it is in the transport position, and **in that** the positioning mounting (46) is provided with a spring-loaded pin (48) that can be logged in place in the bore (47),
wherein optionally, the pin (48) is rotatable by means of a knob (49) or the like, wherein the positioning mounting (46) has a control contour (50), and wherein, by means of the control contour (50), through rotation of the knob (49), the pin (48) can be drawn out of the bore (47) against the action of spring force, transversally relative to the support leg (3).

## Revendications

1. Montant de machine comportant
un corps de support allongé (2) et
des piétements (3) disposés aux extrémités du support allongé (2),
dans lequel le support allongé (2) est agencé sous la forme de moyens de finition terminale (4) s'étendant dans le sens longitudinal, de telle façon que des pièces annexes (5), en particulier au moins un interrupteur (5') de machine, puissent être déplacées en coulissement dans la direction longitudinale,
dans lequel, à chaque extrémité du support allongé (2), sont montés deux piétements (3), chacun desdits piétements (3) étant fixé au support allongé (2) au moyen d'une fixation de maintien de piétement (39) pivotante, pour les rendre pivotants au moyen de la fixation de maintien de piétement (39) d'une position de repos, sensiblement parallèle au support allongé (2) dans une position d'utilisation, où ils sont étendus vers l'extérieur par rapport au support allongé (2) et réciproquement,
**caractérisé en ce que,**
le piétement (3) porte un élément de verrouillage (42) qui se déplace en coulissant sur ou dans une coulisse (43) de section circulaire dans la fixation de maintien de piétement (39), dont les extrémités correspondent aux positions extrêmes des piétements (3), et
**en ce que** l'axe de pivotement (44) du piétement (3) est dans une moindre mesure, monté directement par la fixation de maintien de piétement (39), en particulier dans une ouverture oblongue, coulissant longitudinalement, **en ce que**, dans la position d'utilisation du piétement (3), vers le haut, coulissé en direction du support allongé (2) et l'élément de verrouillage (42) peut simultanément être encliqueté dans la fixation de maintien de piétement (39).

2. Montant de machine selon la revendication 1, **caractérisé en ce que**, les deux fixations de maintien de piétement (39) sont réalisées ensemble d'une pièce, à une extrémité du support allongé (2) sous la forme de console.

3. Montant de machine selon la revendication 2, **caractérisé en ce que**, la console est réalisée en tôle métallique.

4. Montant de machine selon l'une des revendications 1 à 3, **caractérisé en ce que** la face inférieure du support allongé (2) est avantageusement pourvue de moyens de finition (4) sous forme de listes, dans lesquelles peuvent s'engager des éléments de guidage adaptés aux fixations de maintien de piétement (39), respectivement sur la console, du côté frontal.

5. Montant de machine selon l'une des revendications 1 à 4, **caractérisé en ce que** sur les piétements (3) qui sont montés à une extrémité du support allongé (2) est fixé une roulette de transport (45), qui, dans la position d'utilisation du piétement (3), se trouve à proximité de son extrémité inférieure et se dresse approximativement dans la direction longitudinale à partir du piétement (3).

6. Montant de machine selon la revendication 5, **caractérisé en ce que** la roulette de transport (45) se situe sur le piétement (3) dans une position d'utilisation, à proximité de la face inférieure et, dans une position de transport, à proximité de l'extrémité du corps de support.

7. Montant de machine selon la revendication 6, **caractérisé en ce que** la roulette de transport (45) est montée sur le piétement (3) au moyen d'une fixation coulissante (46) et peut être glissée dans la direction longitudinale du piétement (31) et être fixée au piétement (3) aussi bien dans sa position d'utilisation que dans sa position de transport.

8. Montant de machine selon la revendication 7, **caractérisé en ce que** le piétement (3) comporte un alésage (47), à l'endroit où la fixation coulissante (46) se trouve dans sa position d'utilisation et aussi à l'endroit où la fixation coulissante se trouve dans sa position de transport, et **en ce que** la fixation coulissante (46) comporte une goupille (48) à ressort, qui est agencée pour s'engager dans ledit alésage (47),
dans lequel, de préférence, la goupille (48) peut être tournée avec un bouton (49) ou similaire, la fixation coulissante (46) comportant un contour de guidage (50) et, pouvant, au moyen du contour de guidage (50), dégager la goupille (48) transversalement par rapport au piétement (3), par rotation du bouton (49), de l'alésage (47) à l'encontre de la force du ressort.
